# EUROPÄISCHE PATENTSCHRIFT

(11) **EP 1 666 724 B1**
(45) Veröffentlichungstag und Bekanntmachung des Hinweises auf die Patenterteilung: **25.03.2020**
(21) Anmeldenummer: 06110622.5
(22) Anmeldetag: 24.04.2002
(51) Int. Cl.: F03D 7/04

(54) **METHODE ZUR MAXIMIERUNG DER ENERGIEAUSBEUTE EINER WINDTURBINE**
Method of maximising the energy collection of a wind turbine
Méthode pour maximiser la collection d'énergie d'une éolienne

(30) Priorität: 07.06.2001 DE 10127451
(43) Veröffentlichungstag der Anmeldung: 07.06.2006
(62) Teilanmeldung aus: 02732657.8
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 644 331
- DE-A- 19 532 409
- DE-A- 19 934 415
- US-A- 5 402 332
- TANAKA T ET AL: "Output control by hill-climbing method for a small scale wind power generating system", RENEWABLE ENERGY, PERGAMON PRESS, OXFORD, GB, vol. 12, no. 4, 1 December 1997 (1997-12-01), pages 387-400, XP004101206, ISSN: 0960-1481, DOI: 10.1016/S0960-1481(97)00055-4

## Beschreibung

Die vorliegende Erfindung betrifft ein Verfahren zur Steuerung einer Windenergieanlage und eine Windenergieanlage mit einer Steuerungsvorrichtung zur Steuerung der Windenergieanlage.

Windenergieanlagen mit Steuerungen sind seit Jahren allgemein bekannt und werden inzwischen mit Erfolg eingesetzt. Dabei hat insbesondere die Steuerung einen großen Einfluss auf den Energieertrag einer Windenergieanlage.

Durch eine kontinuierliche Weiterentwicklung der Windenergieanlagen haben sich diese zu komplexen Anlagen entwickelt, in denen eine Vielzahl von Parametern und Einstellwerten aufeinander abgestimmt sein müssen, um einen möglichst optimalen Betrieb zu ermöglichen.

Aufgrund der hohen Komplexität der Anlagen und der hohen Entwicklungskosten für die Entwicklung bzw. Weiterentwicklung solcher Anlagen müssen für den Kauf einer solchen Anlage erhebliche Beträge aufgewendet werden. Es ist leicht nachvollziehbar, dass solche Aufwendungen nur dann akzeptabel sind, wenn die Windenergieanlage während ihrer Lebensdauer aus den sich aus ihrem Betrieb ergebenden Erlösen zusätzlich zu der Amortisation einen möglichst großen Überschuss erwirtschaften lassen.

Dieser Überschuss ist aber untrennbar verbunden mit der Leistungsausbeute einer Windenergieanlage und daher hat insbesondere für den Besitzer / Betreiber einer solchen Anlage die Maximierung des Ertrages eine nachvollziehbar hohe Priorität.

Andererseits sind schon ganz allgemein bei allen Produktionsvorgängen und angesichts der Komplexität von Windenergieanlagen sowie deren Dimensionen Abweichungen vom Idealmaß unvermeidbar. Dabei wird durch Toleranzgrenzen festgelegt, innerhalb welchen Bereiches solche Abweichungen noch als hinnehmbar angesehen werden.

Unabhängig von der Frage, ob eine solche Abweichung tatsächlich hinnehmbar ist oder nicht, bedeutet sie in jedem Fall eine Ertragseinbuße, da sie eine Abweichung von der optimalen Anordnung darstellt.

Das Dokument DE 19 532 409 A1 betrifft ein Verfahren zum Betreiben einer Windenergieanlage und eine zugehörige Windenergieanlage, bei der die Leistung der Windenergieanlage windgeschwindigkeitsabhängig ab einer vorbestimmbaren Windgeschwindigkeit vermindert wird, indem die Betriebsdrehzahl des Rotors der Windenergieanlage beim Auftreten eines Windes mit einer Windgeschwindigkeit oberhalb einer Grenzwind- oder Anströmgeschwindigkeit reduziert wird. Dem Dokument DE 19 934 415 A1 ist eine Optimierungseinrichtung zur Ertragssteigerung bei Windenergieanlagen durch genauere Azimutnachführung zu entnehmen. Demnach ist eine Optimierungsstrategie zur Ertragssteigerung bei Windenergieanlagen durch genauere Azimutnachführung vorgesehen, bei der die Kenntnis eines optimal einzustellenden Winkels zwischen Rotorachse und Windrichtung auf der Erfassung und Auswertung von Windrichtung, Windgeschwindigkeit und erzeugter Leistung beruht.

Das Dokument TANAKA T ET AL: "Output control by hill-climbing method for a small scale wind power generating system", RENEWABLE ENERGY, PERGAMON PRESS, OXFORD, GB, Bd. 12, Nr. 4, 1. Dezember 1997 (1997-12-01), Seiten 387-400, XP004101206, ISSN: 0960-1481, DOI: 10.1016/S0960-1481 (97)00055-4 beschreibt ein Steuerungsverfahren für ein Windenergie-Erzeugungssystem um Windenergie möglichst effektiv zu erzeugen, auch wenn die Charakteristik des Systems unbekannt ist.

Aufgabe der vorliegenden Erfindung ist es, ein Verfahren und eine Windenergieanlage der eingangs genannten Art derart weiterzubilden, dass Ertragseinbußen insbesondere durch Abweichungen im Bereich der Umwandlung der kinetischen Energie des Windes in elektrische Energie, also im Bereich von Rotor, Antriebsstrang und Generator so gering wie möglich sind.

Dazu wird das Verfahren der eingangs genannten Art derart weitergebildet, dass wenigstens eine Betriebseinstellung innerhalb vorgegebener Grenzen variiert wird.

Dabei liegt der Erfindung die Erkenntnis zugrunde, dass sich die Toleranzen innerhalb bekannter Bereiche bewegen und eine Variation wenigstens einer Betriebseinstellung wie z. B. des Blattwinkels, der Azimutposition, des Generatormomentes, etc. innerhalb dieses Toleranzbereiches demnach zu der optimalen Einstellung führen muss.

Um zu vermeiden, dass durch eine permanente Variation einer Betriebseinstellung letztlich eine größere Ertragseinbuße auftritt, werden diese Variationen in vorgebbaren Zeitabständen ausgeführt, so dass, wenn eine optimale Einstellung gefunden wurde, diese für einen vorgegebenen Zeitabschnitt beibehalten wird.

In einer besonders bevorzugten Ausführungsform der Erfindung werden die Zeitabstände abhängig von vorgebbaren Standort- und/oder Betriebsbedingungen variiert, so dass die Standortbesonderheiten, wie relativ gleichförmige oder turbulente Windströmung, Windrichtungswechsel, oder ähnliches berücksichtigt werden können.

In einer besonders bevorzugten Weiterbildung der Erfindung wird die Variation nach einer durch äußere Einflüsse ausgelösten Veränderung der Betriebseinstellung zeitnah ausgeführt. Ist die Zeit dabei hinreichend kurz, wird die Betriebseinstellung über den vorgegebenen Einstellwert hinaus und ggf. einen vorbestimmten Betrag in der entgegengesetzten Richtung zurück variiert, bis die optimale Einstellung gefunden ist. Dieser Vorgang entspricht annähernd einem Einschwing-Vorgang.

Besonders bevorzugt wird bei dem erfindungsgemäßen Verfahren die Differenz zwischen der Ausgangseinstellung und der variierten Einstellung mit dem optimalen Ertrag ermittelt und bei den nachfolgenden Veränderungen und/oder Variationen berücksichtigt. Auf diese Weise kann der Variationsvorgang, und damit die Erreichung maximalen Ertrages verkürzt werden.

In einer insbesondere bevorzugten Ausführungsform der Erfindung umfasst eine erfindungsgemäße Windenergieanlage eine Steuerungsvorrichtung, welche zur Ausführung des Verfahrens geeignet ist, wobei die Steuerungsvorrichtung einen Mikroprozessor oder Mikrocomputer und eine Speichervorrichtung aufweist.

Weitere vorteilhafte Ausführungsformen der Erfindung sind in den Unteransprüchen angegeben.

Im Folgenden wird ein Ausführungsbeispiel anhand der Figuren näher erläutert. Dabei zeigen:
- Figur 1: eine Darstellung des Grundprinzips der vorliegenden Erfindung an Hand eines Diagrammes;
- Figur 2: eine Darstellung eines verbesserten Grundprinzips ;
- Figur 3: eine weiter verbesserte Variante des erfindungsgemäßen Verfahrens;
- Figur 4: ein weiter optimiertes Verfahren; und
- Figur 5: ein zur Ertragsmaximierung noch weiter optimiertes, erfindungsgemäßes Verfahren.

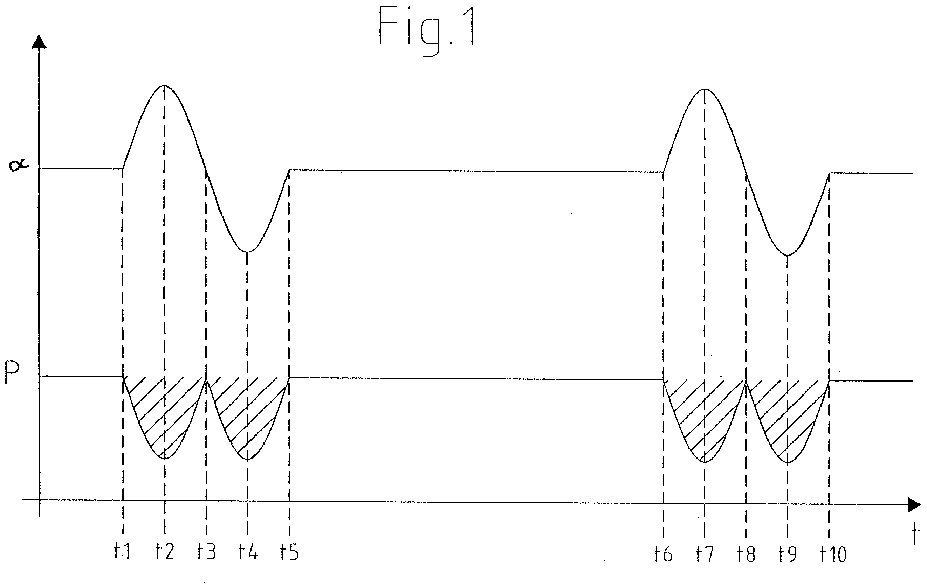

In Figur 1 ist das Grundprinzip des erfindungsgemäßen Verfahrens zur Steuerung einer Windenergieanlage dargestellt. In der Figur ist auf der Abszisse die Zeit t abgetragen, auf der Ordinate ist im oberen Teil die Variation einer Betriebseinstellung, wie z.B. des Azimutwinkels (α) der Gondel und damit des Rotors einer Windenergieanlage dargestellt, und im unteren Teil ist der Übersichtlichkeit halber in einer vereinfachten Darstellung der Verlauf des Ertrages in Form einer Leistungskennlinie (P) dargestellt.

Aus der oberen Kennlinie ist zu entnehmen, dass die Variation der Betriebseinstellung aus der Ausgangsposition heraus sinusförmig zunächst zum Zeitpunkt t1 in einer positiven Richtung beginnt, zum Zeitpunkt t2 einen Maximalwert erreicht und zum Zeitpunkt t3 wieder den Ausgangswert erreicht hat. Von dort wird nun die Variation in entgegengesetzter Richtung fortgesetzt, wobei sie zum Zeitpunkt t4 wiederum das Maximum erreicht und zum Zeitpunkt t5 wieder den Ausgangswert angenommen hat.

Ergibt sich nun während dieser Variation eine Ertragssteigerung, so kann die Betriebseinstellung entsprechend verändert werden, so dass die Windenergieanlage einen höheren Ertrag liefert.

Die untere Kennlinie zeigt den Ertrag, der in Abhängigkeit der Betriebseinstellung variiert. Zum Zeitpunkt t1, also mit Beginn der Variation nimmt der Ertrag bis zum Erreichen des Maximums der Variation zum Zeitpunkt t2 ab, und während die Einstellung wieder auf den Ausgangswert zurückgeführt wird (t3) nimmt der Ertrag wieder zu, bis auch er zum Zeitpunkt t3 seinen Ausgangswert erreicht. Bei der Umkehr der Variationsrichtung nimmt der Ertrag in dem vorliegenden Beispiel ebenfalls wieder ab, erreicht zum Zeitpunkt t4 das Minimum (das Maximum der Ertragsabnahme) und erreicht zum Zeitpunkt t5 wieder seinen Ausgangswert. Damit ist deutlich erkennbar, dass die Ausgangseinstellung der Windenergieanlage optimal war.

Zu einem vorgegebenen Zeitpunkt (in diesem Beispiel t6), nachdem ein vorgegebenes Intervall verstrichen ist, kann der Vorgang wiederholt werden.

Bei diesem Verfahren konkurrieren einerseits die Möglichkeit einer Ertragssteigerung und andererseits die durch die Variation einer optimalen Einstellung auftretenden Ertragseinbußen.

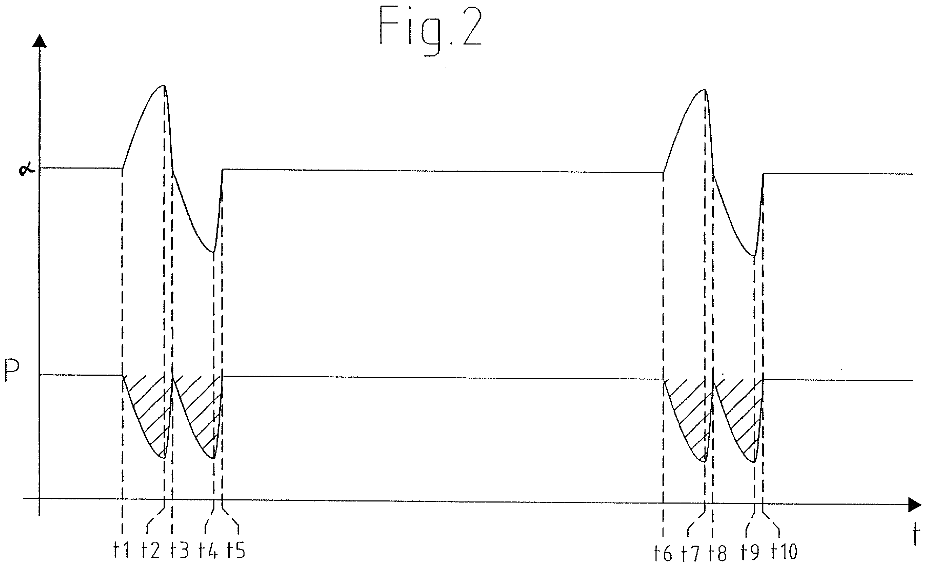

Eine Möglichkeit zur Verringerung dieser Ertragseinbußen ist in Figur 2 dargestellt. In dieser Figur ist auf der Abszisse wiederum die Zeit abgetragen, während auf der Ordinate die obere Kennlinie die Variation der Betriebseinstellung und die untere Kennlinie den Verlauf des Ertrages wiedergeben.

Während bei der Variation der Betriebseinstellung der Anstieg von dem Ausgangswert ausgehend nach wie vor sinusförmig ist, wird die Flankensteilheit des Signals nach Erreichen des Scheitelwertes erhöht, so dass die Rückkehr zum Ausgangswert schnellstmöglich erfolgt. Der Abstand zwischen den Zeitpunkten t1 und t2 bleibt im Vergleich zu Figur 1 im Wesentlichen unverändert; der Abstand zwischen den Zeitpunkten t2 und t3 wird jedoch deutlich verringert. Im Idealfall wird der Abstand zwischen t2 und t3 gegen Null gehen, so dass zumindest in einer ersten Näherung die Ertragseinbuße in diesem Abschnitt zwischen den Zeitpunkten t2 und t3 ebenfalls sehr klein wird.

Das Gleiche wiederholt sich für die negative Halbwelle, deren Anstieg wiederum sinusförmig ist und zwischen den Zeitpunkten t3 und t4 erfolgt, während die Rückkehr zur Ausgangseinstellung wiederum in dem Zeitraum zwischen t4 und t5 mit einer möglichst großen Steilheit erfolgt. Entsprechend werden die Ertragseinbußen annähernd halbiert. Nach einem vorgegebenen Intervall wiederholt sich dieser Ablauf beginnend mit dem Zeitpunkt t6. Da mit dem jeweils sinusförmig ansteigenden Ablauf jeder Halbwelle in der Variation jede Einstellung innerhalb des Variationsbereiches (des Toleranzbandes) erreicht und bewertet werden kann, verringert diese Ausführungsform die Ertragseinbußen durch die Variation, ohne die Effizienz der Variation selbst zu verändern.

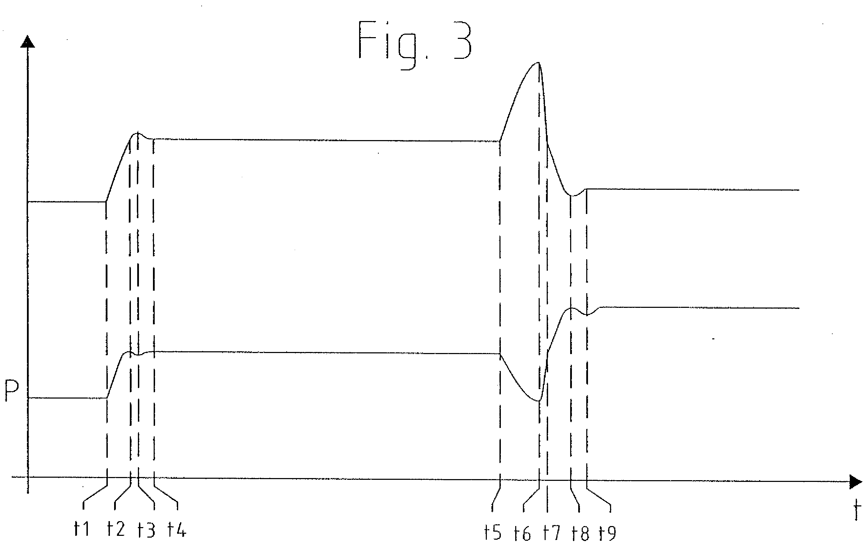

Figur 3 zeigt eine weitere Ausführungsform der vorliegenden Erfindung, bei welcher die Ertragseinbußen durch die Variation der Betriebseinstellungen noch weiter verringert werden. Die Aufteilung von Abszisse und Ordinate entsprechen derjenigen in den anderen Figuren. Auch hier beginnt zum Zeitpunkt t1 die Variation der Betriebseinstellung.

In dem dargestellten Beispiel steigt gleichzeitig der Ertrag bis zu einem Maximum an. Wird der Betrag der Variation weiter erhöht, sinkt der Ertrag wieder ab, d.h., das Ertragsmaximum und damit die optimale Betriebseinstellung sind überschritten. Daher wird bei diesem Verfahren die Erhöhung des Betrages der Variation abgebrochen und die Einstellung wieder hergestellt, bei der sich das Ertragsmaximum eingestellt hat.

Hier ergibt sich in der oberen Kennlinie ein "Überschwingen", da nach Erreichen des Ertragsmaximum natürlich erst einmal das Absinken des Ertrages erkannt werden muss, bevor die Betriebseinstellung für das Ertragsmaximum dann eingestellt werden kann. Dies ist bereits zum Zeitpunkt t4 geschehen, so dass die Variation in entgegengesetzter Richtung nicht mehr ausgeführt werden muss, da ja das Ertragsmaximum bereits gefunden ist. Zum Zeitpunkt t5 beginnt nach einem vorgegebenen Zeitabschnitt wiederum die Variation der Betriebseinstellung, wobei zum Zeitpunkt t6 der Maximalbetrag der Variation erreicht ist und bis t7 der Ausgangswert wieder hergestellt ist. Da sich hier eine Ertragseinbuße ergeben hat, wird nun die Variation der entgegengesetzten Richtung ausgeführt und zum Zeitpunkt t9 stellt sich nach einem Überschwingen bei t8 wiederum ein Ertragsmaximum ein, so dass die entsprechende Einstellung beibehalten wird.

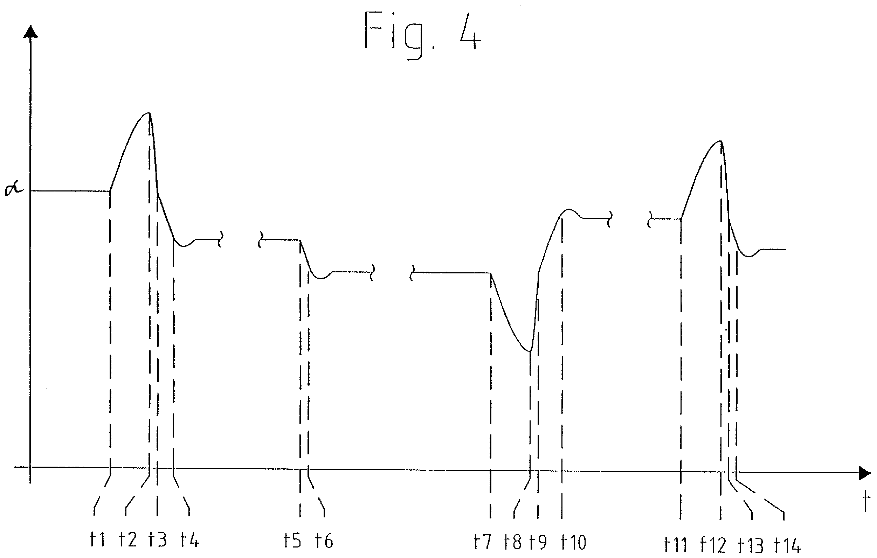

Eine weitere Ausführungsform der Erfindung ist in Figur 4 dargestellt. Hier ist die Abszisse wiederum die Zeitachse und die Ordinate zeigt die Variation der Betriebseinstellung. Die wesentliche Änderung gegenüber den oben beschriebenen Verfahren ist diejenige, dass als Anfangsrichtung für die Variation diejenige Richtung verwendet wird, bei der sich bei der vorherigen Variation eine Ertragssteigerung ergeben hat.

Zum Zeitpunkt t1 beginnt die Variation der Betriebseinstellung, erreicht zum Zeitpunkt t2 ihrer Maximum und zum Zeitpunkt t3 wiederum ihren Ausgangswert. Da es in dem angenommenen Beispiel zu keiner Ertragssteigerung gekommen sei, wird die Variation nun mit umgekehrtem Vorzeichen, also in der entgegengesetzten Richtung ausgeführt. Zum Zeitpunkt t4 wird ein Ertragsmaximum erreicht, und nach einem kurzen Überschwinger dieses Ertragsmaximum beibehalten.

Nach einem vorgegebenen Zeitabschnitt wird zum Zeitpunkt t5 wiederum "turnusmäßig" die Betriebseinstellung variiert und die Anfangsrichtung entspricht hier derjenigen Richtung, die bei der vorherigen Variation zu einer Ertragssteigerung führte, also der negativen Halbwelle. Zum Zeitpunkt t6 wird wiederum ein Ertragsmaximum erreicht, so dass diese Einstellung beibehalten wird. Damit entfällt die Ertragseinbuße völlig, die bei der positiven Halbwelle aufgetreten wäre.

Nach einem weiteren Zeitabschnitt beginnt zum Zeitpunkt t7 wiederum die Variation der Betriebseinstellung. Diese beginnt wiederum mit der negativen Halbwelle, da diese bei der vorherigen Variation wiederum zu einer Ertragssteigerung führte. In diesem Fall sei angenommen, dass dieses nicht der Fall ist, so dass zum Zeitpunkt t8 das Maximum erreicht wird und zum Zeitpunkt t9 der Ausgangswert wieder hergestellt ist. Nun wird wiederum die Richtung der Variation umgekehrt und an die negative Halbwelle schließt sich eine positive Halbwelle an, in der zum Zeitpunkt t10 das Ertragsmaximum erreicht wird, so dass dieser Wert nun beibehalten wird.

Zum Zeitpunkt t11 beginnt eine weitere Variation, dieses Mal mit der positiven Halbwelle, da diese bei der vorherigen Variation zu einer Ertragssteigerung führte. Zum Zeitpunkt t12 ist das Maximum erreicht und zum Zeitpunkt t13 wiederum die Ausgangseinstellung. Da zum Zeitpunkt t14 in diesem Beispiel wiederum ein Ertragsmaximum erreicht wird, wird diese Einstellung beibehalten, so dass die nachfolgende Variation wiederum mit der negativen Halbwelle beginnen wird.

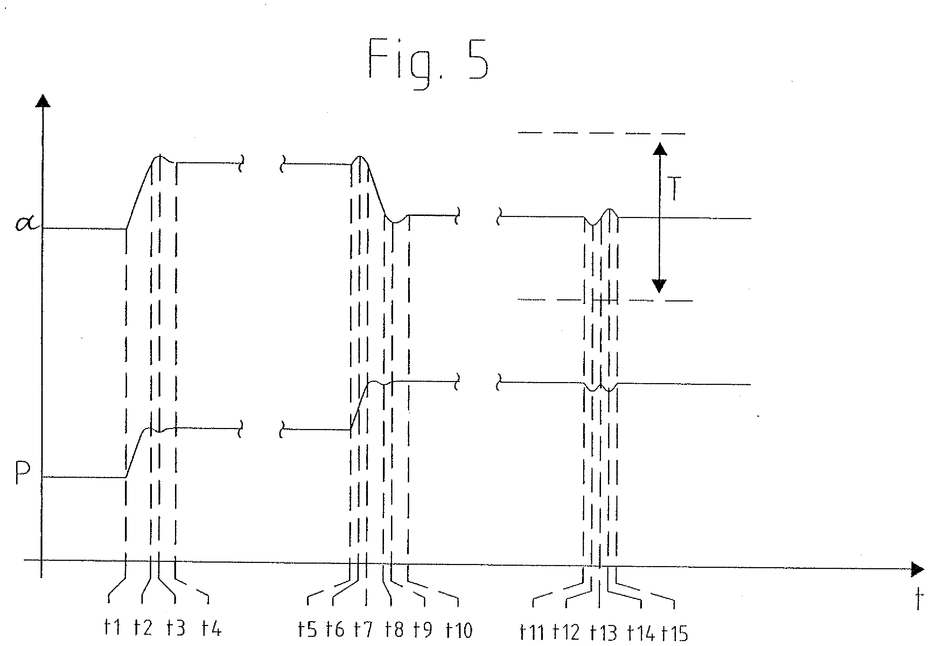

Figur 5 zeigt eine noch weiter verbesserte Ausführungsform der vorliegenden Erfindung. In dieser Figur ist die Abszisse wiederum die Zeitachse, während die Ordinate im oberen Teil die Veränderung einer Betriebseinstellung und im unteren Teil wiederum den Ertragsverlauf zeigt. Bei dieser Ausführungsform des erfindungsgemäßen Verfahrens werden Ertragseinbußen infolge der Variation noch weiter verringert. Dieses wird mit dem erfindungsgemäßen Verfahren dadurch erreicht, das bei der Feststellung einer Ertragseinbuße die Variationsrichtung umgekehrt wird. Kommt es nach der Umkehr der Variationsrichtung wiederum zu einer Ertragseinbuße, wird die Variation abgebrochen.

In der Figur 5 beginnt die Variation wiederum zum Zeitpunkt t1 mit einer positiven Halbwelle und zum Zeitpunkt t2 wird das Ertragsmaximum erreicht. Nach einem "Überschwinger" (t3) wird das Ertragsmaximum zum Zeitpunkt t4 eingestellt und für einen vorgegebenen Zeitabschnitt beibehalten, bis zum Zeitpunkt t5 wiederum eine Variation beginnt.

Diese beginnt wiederum mit einer positiven Halbwelle. Allerdings zeigt sich zum Zeitpunkt t6 bereits eine Ertragseinbuße. Daher wird die Variationsrichtung umgekehrt und die negative Halbwelle der Variation der Betriebseinstellung beginnt zum Zeitpunkt t7. Zum Zeitpunkt t8 wird ein Ertragsmaximum erreicht und nach einem Überschwinger (t9) wird zum Zeitpunkt t10 diese Einstellung beibehalten. Nach einem weiteren, vorgegebenen Zeitabschnitt wird zum Zeitpunkt t11 wiederum die Betriebseinstellung variiert.

Da bei der vorherigen Variation die negative Halbwelle zu einer Ertragssteigerung führte, beginnt auch diese Variation mit der negativen Halbwelle. Bereits zum Zeitpunkt t12 wird erkannt, dass diese Variationsrichtung zu einer Ertragseinbuße führt und die Variationsrichtung wird umgekehrt, so dass zum Zeitpunkt t13 wiederum der Ausgangswert erreicht ist und die positive Halbwelle beginnt.

Zum Zeitpunkt t14 wird erkannt, dass auch diese Variationsrichtung zu einer Ertragseinbuße führt, und der Variationsvorgang wird abgebrochen. Zum Zeitpunkt t15 ist die Ausgangs-Betriebseinstellung wieder hergestellt.

Um den wesentlichen Vorteil dieser Ausführungsform zu verdeutlichen, ist in der Figur die vorgegebene Variationsgrenze (T) in beiden Richtungen von der Ausgangseinstellung eingetragen. Aufgrund der erheblich kleineren Amplitude der Variation der Betriebseinstellung sind auch die Ertragseinbuße bei dieser Variation erheblich geringer. Der Möglichkeit einer signifikanten Ertragssteigerung steht damit eine vernachlässigbare Ertragseinbuße für den Fall entgegen, dass die Ausgangs-Betriebseinstellung bereits die optimale Betriebseinstellung ist.

Neben dem Ausgleich von unvermeidbaren Fertigungs- bzw. Montagetoleranzen, den diese Erfindung ermöglicht, kann durch das erfindungsgemäß vorgeschlagene Verfahren auch bei der Änderung äußerer Betriebsbedingungen, wie der Windrichtung eine Ertragssteigerung erfolgen, wenn die Änderung noch innerhalb der Toleranzbreite der Anlagen-Steuerung liegt. Ändert sich also z.B. die Windrichtung nur um einen geringen Betrag, dann wird die Azimutverstellung nicht in Folge der Windrichtungsänderung aktiviert. Trotzdem ergibt sich durch einen geringfügig veränderten Anström-Winkel eine geringe Ertragseinbuße. Diese kann durch das erfindungsgemäße Verfahren wieder ausgeglichen werden, wenn die Azimuteinstellung regelmäßig variiert wird.

Weiterhin ist ein Ausgleich von Montagefehlern möglich. Eine Fehlanzeige der Windfahne, z. B. durch einen Montagefehler, kann durch die erfindungsgemäße Steuerung ausgeglichen werden, sofern sie innerhalb der Toleranzbreite der Anlagen-Steuerung liegt. Dadurch kann eine durch die auf dem Anzeigeergebnis der Windfahne basierende, nicht optimale Energieausbeute optimiert werden.

Die Erfindung ist bevorzugt anzuwenden bei einem Satz von Betriebsparameter-Einstellungen. Bevorzugte Parameter sind hierbei die Pitch-Einstellung (Rotorblattwinkeleinstellung), die Azimuteinstellung (Rotoreinstellung) sowie der Erregerstrom des Generators zur Bestimmung des Generatormoments.

Je nach Windbedingungen gibt es für die verschiedensten Parameter-Einstellungen einen Parametersatz, der zur Steuerung in Form einer Tabelle hinterlegt sein kann. Aus der dann gemessenen Windgeschwindigkeit ergibt sich für den konkreten Anlagetyp jeweils eine optimale Schnelllaufzahl (das Verhältnis der Umfangsgeschwindigkeit der Rotorblattspitze zur Windgeschwindigkeit) für einen maximalen Energieertrag. Da infolge der bekannten Rotor-Parameter das bei dieser Windgeschwindigkeit zur Verfügung stehende Drehmoment bekannt ist, kann ein optimales Generatormoment anhand der Vorgaben der Tabelle bestimmt werden.

Ist das Generatormoment nicht an die Schnelllaufzahl angepasst, ergeben sich daraus Nachteile. Bei zu niedrigem Generatordrehmoment erhöht sich die Schnelllaufzahl und der Rotor beschleunigt in unerwünschter Weise, weil der Wind eine entsprechende Energie zuführt. Bei zu hohem Generatormoment wird der Rotor hingegen zu weit gebremst, so dass der Rotor zu langsam läuft und dem Wind nicht die maximal mögliche Energie entnimmt. Da das Generatormoment aber von der Höhe des Erregerstroms direkt abhängig ist, ergibt sich eine Einstellmöglichkeit, um an dieser Stelle den Betrieb der Windenergieanlage im Sinne einer Optimierung zu beeinflussen.

Eine weitere Möglichkeit der erfindungsgemäßen Anwendung betrifft die Azimutanpassung, um einen eventuellen Gierwinkel möglichst gering ausfallen zu lassen, sowie die Einstellung des Anstellwinkels der Rotorblätter (Pitch), um wiederum ein maximales Drehmoment zu erreichen und dementsprechend dem Wind ein Maximum an Energie zu entziehen.

## Patentansprüche

1. Verfahren zur Steuerung einer Windenergieanlage, **dadurch gekennzeichnet, dass** wenigstens eine Betriebseinstellung (a) innerhalb vorgegebener Grenzen (T) variiert wird, wobei die Variation in vorgebbaren Zeitabständen (t1, t2, t3, t4, t5, t6, t7, t8, t9, t10) ausgeführt wird, so dass, wenn eine optimale Einstellung gefunden wurde, diese für einen vorgegebenen Zeitabschnitt beibehalten wird.

2. Verfahren nach Anspruch 1,
**dadurch gekennzeichnet, dass** die Zeitabstände abhängig von vorgebbaren Standort- und / oder Betriebsbedingungen variiert werden.

3. Verfahren nach einem der vorstehenden Ansprüche,
**dadurch gekennzeichnet, dass** die Variation um einen vorgegebenen Betrag von der Ausgangseinstellung in einer Richtung oder nacheinander in zwei entgegengesetzten Richtungen erfolgt.

4. Verfahren nach einem der vorstehenden Ansprüche,
**dadurch gekennzeichnet, dass** die Variation nach einer durch äußere Einflüsse ausgelösten Veränderung einer Betriebseinstellung (a) ausgeführt wird.

5. Verfahren nach einem der vorstehenden Ansprüche,
**dadurch gekennzeichnet, dass** zeitnah zu der Variation der Betriebseinstellung (a) eine Schnelllaufzahl eines Rotorblattes erfasst wird.

6. Verfahren nach Anspruch 5,
**dadurch gekennzeichnet, dass** eine Differenz zwischen der Ausgangseinstellung und der variierten Einstellung mit der höchsten Schnelllaufzahl ermittelt wird.

7. Verfahren nach Anspruch 6,
**dadurch gekennzeichnet, dass** die ermittelte Differenz bei jeder nachfolgenden, durch äußere Einflüsse ausgelösten Veränderung der Betriebseinstellung (a) berücksichtigt wird.

8. Verfahren nach einem der vorstehenden Ansprüche,
**dadurch gekennzeichnet, dass** der Rotorblatt-Anstellwinkel und/oder die Azimuteinstellung und/oder das Generatormoment variiert wird.

9. Verfahren nach einem der vorstehenden Ansprüche,
**dadurch gekennzeichnet, dass** die variierte Einstellung, die Richtung und der Betrag der Variation gespeichert und/oder ausgewertet werden.

10. Verfahren nach einem der vorstehenden Ansprüche,
**dadurch gekennzeichnet, dass** der Betrag der Variation mit einer ersten Geschwindigkeit gesteigert und mit einer zweiten Geschwindigkeit verringert wird.

11. Verfahren nach Anspruch 10,
**dadurch gekennzeichnet, dass** die erste Geschwindigkeit geringer als die zweite Geschwindigkeit ist.

12. Verfahren nach einem der vorstehenden Ansprüche,
**dadurch gekennzeichnet, dass** die Variationsrichtung, die bei der vorausgehenden Variation zu einer Ertragssteigerung führte, als Anfangsrichtung für die Variation verwendet wird.

13. Verfahren nach einem der vorstehenden Ansprüche,
**dadurch gekennzeichnet, dass** die Variationsrichtung bei einer Ertragsverringerung umgekehrt wird.

14. Verfahren nach Anspruch 13,
**dadurch gekennzeichnet, dass** nach einer Ertragsverringerung nach einer Umkehr der Variationsrichtung die Variation beendet wird.

15. Windenergieanlage zur Durchführung des Verfahrens nach einem der vorhergehenden Ansprüche, wobei die Windenergieanlage einen Rotor, einen damit verbundenen Generator sowie eine Steuerungsvorrichtung zur Steuerung einzelner Anlageteile, z.B. der Blatteinstellung der Rotorblätter eines Rotors und/oder des Generators und/oder zur Ausrichtung des Rotors zum Wind aufweist.

16. Windenergieanlage nach Anspruch 15,
**dadurch gekennzeichnet, dass** die Steuerungsvorrichtung wenigstens einen Mikroprozessor oder Mikrocomputer und Speicher enthält.

## Claims

1. Method for controlling a wind turbine, **characterised in that** at least one operational setting (a) is varied within predetermined limits (T), wherein the variation is performed in predeterminable time intervals (t1, t2, t3, t4, t5, t6, t7, t8, t9, t10) so that, when an optimal setting has been found, this is maintained for a given period of time.

2. Method according to claim 1,
**characterised in that** the time intervals are varied in response to predefinable ambient and/or operating conditions.

3. Method according to one of the preceding claims,
**characterised in that** the variations are by a predefined amount in one direction, starting from the initial setting, or successively in two opposing directions.

4. Method according to one of the preceding claims,
**characterised in that** the variation is performed after a change in an operational setting (a) has been caused by external factors.

5. Method according to one of the preceding claims,
**characterised in that** a tip speed ratio of a rotor blade is detected contemporaneously with the variation of the operational setting (a).

6. Method according to claim 5,
**characterised in that** a difference between the initial setting and the varied setting with the highest tip speed ratio is quantified.

7. Method according to claim 6,
**characterised in that** the quantified difference is taken into account in every subsequent change of operational setting (a) in response to external factors.

8. Method according to one of the preceding claims,
**characterised in that** the rotor blade pith angle and/or the azimuth setting and/or the generator torque is varied.

9. Method according to one of the preceding claims,
**characterised in that** the varied setting, the direction and the amount of variation are stored and/or analysed.

10. Method according to one of the preceding claims,
**characterised in that** the amount of variation is increased with a first speed and reduced with a second speed.

11. Method according to claim 10,
**characterised in that** the first speed is less than the second speed.

12. Method according to one of the preceding claims,
**characterised in that** the direction of variation that led in the preceding variation phase to an increase in power yield is used as the direction for the variation.

13. Method according to one of the preceding claims,
**characterised in that** the direction of variation is reversed if the power yield has decreased.

14. Method according to claim 13,
**characterised in that** the variation is terminated after a power yield reduction occurs following a reversal of the direction of variation.

15. Wind turbine for performing the method according to any one of the preceding claims, wherein the wind turbine comprises a rotor, a generator connected thereto and a controller for controlling each turbine parts, for example the pitch of the rotor blades of a rotor and/or of the generator and/or for setting the attitude of the rotor to the wind.

16. Wind turbine according to claim 15,
**characterised in that** the controller includes at least one microprocessor or microcontroller and a memory device.

## Revendications

1. Procédé servant à commander une éolienne, **caractérisé en ce qu'**au moins un réglage de fonctionnement (α) varie à l'intérieur de limites (T) prédéfinies, dans lequel la variation est réalisée à des intervalles de temps (t1, t2, t3, t4, t5, t6, t7, t8, t9, t10) pouvant être prédéfinis de sorte que, quand un réglage optimal a été trouvé, celui-ci est conservé pour un laps de temps prédéfini.

2. Procédé selon la revendication 1,
**caractérisé en ce que** les intervalles de temps varient en fonction de conditions d'emplacement et/ou de fonctionnement pouvant être prédéfinies.

3. Procédé selon l'une quelconque des revendications précédentes,
**caractérisé en ce que** la variation est effectuée selon une valeur prédéfinie depuis le réglage de départ dans un sens ou dans deux sens opposés l'un après l'autre.

4. Procédé selon l'une quelconque des revendications précédentes,
**caractérisé en ce que** la variation est réalisée après une modification, déclenchée par des influences extérieures, d'un réglage de fonctionnement (α).

5. Procédé selon l'une quelconque des revendications précédentes,
**caractérisé en ce qu'**une vitesse spécifique d'une pale de rotor est détectée en temps réel aux fins de la variation du réglage de fonctionnement (α).

6. Procédé selon la revendication 5,
**caractérisé en ce qu'**une différence entre le réglage de départ et le réglage varié avec la vitesse spécifique maximale est déterminée.

7. Procédé selon la revendication 6,
**caractérisé en ce que** la différence déterminée pour chaque modification suivante, déclenchée par des influences extérieures, du réglage de fonctionnement (α), est prise en compte.

8. Procédé selon l'une quelconque des revendications précédentes,
**caractérisé en ce que** l'angle d'attaque de pale de rotor et/ou le réglage azimutal et/ou le couple de générateur varient.

9. Procédé selon l'une quelconque des revendications précédentes,
**caractérisé en ce que** le réglage varié, le sens et la valeur de la variation sont mémorisés et/ou analysés.

10. Procédé selon l'une quelconque des revendications précédentes,
**caractérisé en ce que** la valeur de la variation est augmentée avec une première vitesse et est réduite avec une deuxième vitesse.

11. Procédé selon la revendication 10,
**caractérisé en ce que** la première vitesse est inférieure à la deuxième vitesse.

12. Procédé selon l'une quelconque des revendications précédentes,
**caractérisé en ce que** le sens de variation, qui a mené lors de la variation précédente à une hausse de rendement, est utilisé en tant que sens initial pour la variation.

13. Procédé selon l'une quelconque des revendications précédentes,
**caractérisé en ce que** le sens de variation est inversé lors d'une baisse de rendement.

14. Procédé selon la revendication 13,
caractérisé en ce la variation se termine après une baisse de rendement après une inversion du sens de variation.

15. Eolienne servant à mettre en œuvre le procédé selon l'une quelconque des revendications précédentes, dans laquelle l'éolienne présente un rotor, un générateur relié à celui-ci ainsi qu'un dispositif de commande servant à commander diverses parties de l'installation, par exemple le réglage de pale des pales de rotor d'un rotor et/ou du générateur et/ou servant à orienter le rotor par rapport au vent.

16. Eolienne selon la revendication 15,
**caractérisée en ce que** le dispositif de commande contient au moins un microprocesseur ou un micro-ordinateur et une mémoire.
